# EUROPEAN PATENT APPLICATION

(11) **EP 4 851 913 A1**
(43) Date of publication of application: **09.12.2026**
(21) Application number: 24772553.4
(22) Date of filing: 04.03.2024
(51) Int. Cl.: G06T 5/60, G06T 7/73, G06T 3/067, G06N 3/092, G06N 3/0464

(54) **IMAGE RESTORATION METHOD AND IMAGING SYSTEM FOR EXECUTING SAME**

(30) Priority: 29.01.2024 KR 20240013365
(71) Applicant: IUCF-HYU (Industry-University Cooperation Foundation Hanyang University), Seoul 04763 (KR)
(72) Inventor: SEO, Joon Hyuk, Hanam-si, Gyeonggi-do 12913 (KR); JO, Jae Gang, Changwon-si, Gyeongsangnam-do 51479 (KR); SEO, Dong Jin, Seoul 06539 (KR); KANG, Chan Ik, Wonju-si, Gangwon-do 26399 (KR); CHUNG, Hae Jun, Seoul 04731 (KR)
(74) Representative: Prüfer & Partner mbB Patentanwälte · Rechtsanwälte
(86) International application number: PCT/KR2024/002758
(87) International publication number: WO 2025/164837

(57) **Abstract**

Disclosed is a image restoration device comprised a memory that stores an original image captured by a camera and an artificial intelligence model and a processor that trains the artificial intelligence model, wherein the artificial intelligence model includes an image restoration model that crops the original image into preset patches and generates a restored image based on input data in which coordinate information of the patches is embedded into a cropped patch image and a discrimination model that Fourier-transforms the restored image generated by the image restoration model and distinguishes the Fourier-transformed restored image, and the processor is configured to perform adversarial learning of the image restoration model and the discrimination model and generate a restored image for a new original image captured by the camera from the image restoration model that has completed training.

## Description

### TECHNICAL FIELD

The present invention relates to an image restoration method using a positional embedding technique and an adversarial learning method performed in Fourier space to improve the performance of an ultra-small imaging system with optical aberrations, and an imaging system for executing the same.

### BACKGROUND ART

A metalens, which is an ultra-thin lens composed of an ultra-short wavelength structure, is attracting attention as a technology that may overcome the limitations of existing lenses. However, according to recent research, a large-area broadband metalens has a problem in that a fundamental trade-off occurs between broadband focus efficiency and diameter. Therefore, the currently disclosed broadband metalens have chromatic aberrations or low focus efficiency in a wide bandwidth, which is an obstacle to the commercialization of a metalens-based small imaging system.

Meanwhile, previously disclosed image restoration technologies are as follows.

NPL 1 discloses an image restoration method through deconvolution. NPL 1 assumes that performance degradation does not vary depending on location and performs deconvolution using a previously measured point spread function (PSF) on the damaged image. In other words, the technique of NPL 1 had a problem in that it could not consider performance degradation depending on location because it assumed that performance degradation does not vary depending on location.

NPL 2 discloses an image restoration technique using deep learning. The technique of NPL 2 randomly crops patch images from a given image rather than using the full-resolution image as it is due to the physical limitations of graphic processing units (GPUs) and for learning efficiency. In this case, when a model is trained on the given data, the location information of the image is completely lost, and there is a limitation in that performance degradation due to lens aberrations cannot be learned.

NPL 3 discloses a patch-wise deconvolution method through patch-based PSF. NPL 3 used PSFs for each unit patch region on the image to restore image damage caused by general optical aberrations with PSFs that change depending on the viewing angle, so there were problems in terms of cost and time because they were directly measured by humans for training.
[Non-Patent Literature 1]
   Krishnan, Dilip, and Rob Fergus. "Fast image deconvolution using hyper-Laplacian priors." Advances in neural information processing systems 22 (2009).
[Non-Patent Literature 2]
   Zamir, Syed Waqas, et al. "Multi-stage progressive image restoration." Proceedings of the IEEE/CVF conference on computer vision and pattern recognition. 2021.
[Non-Patent Literature 3]
   Li, Xiu, et al. "Universal and flexible optical aberrations correction using deep-prior based deconvolution." Proceedings of the IEEE/CVF International Conference on Computer Vision. 2021.

### DISCLOSURE

### TECHNICAL SOLUTION

The disclosed embodiment relates to an image restoration method that can solve image quality degradation in an ultra-small imaging system by using an artificial intelligence model that has trained from image data directly captured by a lens with strong aberrations and directly learning clear correct data in the frequency domain, and can restore image damage in a high spatial frequency domain and an imaging system executing the method.

According to one embodiment of the present disclosure, the image restoration device comprises a memory that stores an original image captured by a camera and an artificial intelligence model and a processor that trains the artificial intelligence model, wherein the artificial intelligence model includes an image restoration model that crops the original image into preset patches and generates a restored image based on input data in which coordinate information of the patches is embedded into a cropped patch image and a discrimination model that Fourier-transforms the restored image generated by the image restoration model and distinguishes the Fourier-transformed restored image, and the processor is configured to perform adversarial learning of the image restoration model and the discrimination model and generate a restored image for a new original image captured by the camera from the image restoration model that has completed training.

The processor is configured to generate the coordinate information based on a middle pixel of the patch image convert the coordinate information into 2D coordinate data through a meshgrid method and generate the input data by concatenating the coordinate information converted into 2D coordinate data to the patch image through a 1x1 convolution layer.

The processor inputs the input data output from the 1x1 convolution layer into a first neural network whose output data has the same size as the input data, and outputs the restored image from the first neural network.

The first neural network includes a CNN (Convolution Neural Network) model including at least one of MIRNet, MPRNet, and NAFNet, or a Transformer model including at least one of Restormer and Uformer.

The discrimination model includes a CNN model including at least one of GoogleNet, AlexNet, and VGG Network that discriminates whether the Fourier-transformed restored image is true or false, and the processor compares the Fourier-transformed restored image with the correct image through the discrimination model, and based on the comparison result, causes the image restoration model to perform adversarial learning so that the image restoration model generates a high-frequency restored image from a low-frequency original image.

The processor trains the discrimination model so that it outputs a preset first reference value or more for the correct image and outputs a preset second reference value or less for the restored image.

An imaging system comprises a camera including a metalens a memory that receives an original image captured by the camera and stores an artificial intelligence model a processor that trains the artificial intelligence model and a display that outputs a restored image that restores the original image through the artificial intelligence model for which the processor has completed training, wherein the artificial intelligence model includes an image restoration model that crops the original image into patches of a preset size and generates a restored image based on input data in which coordinate information of the patches is embedded into a cropped patch image; and a discrimination model that Fourier-transforms the restored image generated by the image restoration model and distinguishes the Fourier-transformed restored image.

The processor is configured to generate the coordinate information based on a middle pixel of the patch image convert the coordinate information into 2D coordinate data through a meshgrid method; and generate the input data by concatenating the coordinate information converted into 2D coordinate data to the patch image through a 1x1 convolution layer.

The processor inputs the input data output from the 1x1 convolution layer into a first neural network whose output data has the same size as the input data, and outputs the restored image from the first neural network.

The processor compares the Fourier-transformed restored image with the correct image through the discrimination model, and based on the comparison result, causes the image restoration model to perform adversarial learning so that the image restoration model generates a high-frequency restored image from a low-frequency original image.

The processor trains the discrimination model so that it outputs a preset first reference value or more for the correct image and outputs a preset second reference value or less for the restored image.

An image restoration method, comprises training an artificial intelligence model causing a camera including a metalens or a diffractive optics lens to acquire an original image; and generating a restored image of the original image through the artificial intelligence model that has completed training, wherein the artificial intelligence model includes an image restoration model that crops an image of learning data into patches of a preset size and generates a restored image based on input data in which coordinate information of the patches is embedded into a cropped patch image; and a discrimination model that Fourier-transforms the restored image generated by the image restoration model and distinguishes the Fourier-transformed restored image, and the training of the artificial intelligence model includes comparing the Fourier-transformed restored image with the correct image through the discrimination model, and based on the comparison result, causing the image restoration model to perform adversarial learning so that the image restoration model generates a high-frequency restored image from a low-frequency original image.

The causing of the image restoration model to generate the restored image includes generating the coordinate information based on a middle pixel of the patch image converting the coordinate information into 2D coordinate data through a meshgrid method; and embedding the input data by concatenating the coordinate information converted into 2D coordinate data to the patch image through a 1x1 convolution layer.

The causing of the image restoration model to generate the restored image includes inputting the input data output from the 1x1 convolution layer into a first neural network whose output data has the same size as the input data, and outputting the restored image from the first neural network.

The training of the artificial intelligence model includes training the discrimination model so that it outputs a preset first reference value or more for the correct image and outputs a preset second reference value or less for the restored image.

The image restoration method and the imaging system executing the same according to one embodiment of the disclosure can solve image quality degradation in an ultra-small imaging system by using an artificial intelligence model that has trained from image data directly captured by a lens with strong aberrations.

In addition, the disclosed image restoration method and the imaging system executing the same can restore image damage in a high spatial frequency domain by directly learning clear correct data in the frequency domain. Therefore, when the disclosed image restoration method and the imaging system executing the same are mounted on a wearable device such as a smartphone, they can solve the camera popping-out phenomenon of the smartphone and enable capturing high-quality images/videos.

In addition, the disclosed image restoration method and the imaging system executing the same may also exhibit excellent performance for downstream applications that may be performed from images captured by cameras installed in unmanned aerial vehicles, AR (Augmented Reality)/VR (Virtual Reality) devices based on improved image/video quality.

The disclosed image restoration method and the imaging system executing the same may realize lightweight lenses, so that the weight of the imaging system to be mounted may be reduced, and thus the weight of unmanned aerial vehicles, drones, or the like may be reduced, and thus, power efficiency may also be increased. In addition, the disclosed image restoration method and the imaging system executing the same may reduce the weight of the device itself by mounting an ultra-small imaging system on the imaging system that acts as the eye in the AR/VR device, and thus, power efficiency may be increased, and user fatigue may be significantly reduced, thereby improving user experience.

### DESCRIPTION OF DRAWINGS

FIG. 1 is a schematic diagram for explaining each component of an imaging system according to one embodiment of the disclosure.
FIG. 2 is a control block diagram of an image restoration device according to one embodiment of the disclosure.
FIG. 3 is an overall flowchart for an image restoration method according to one embodiment of the disclosure.
FIG. 4 is a diagram for specifically explaining an artificial intelligence model according to one embodiment of the disclosure.
FIGS. 5 and 6 are diagrams for explaining a method of generating and combining coordinate information.
FIG. 7 is a flowchart for specifically explaining a method of conducting learning in an image restoration method according to one embodiment of the disclosure.
FIG. 8 is a diagram for explaining a discrimination process according to one embodiment of the disclosure.
FIG. 9 is an example of the result of the disclosed imaging system.
FIG. 10 is a table showing the performance comparison result of the disclosed image restoration method.

### MODE FOR INVENTION

The same reference numerals throughout the specification refer to the same components. This specification does not describe all elements of the embodiments, and common or repetitive content between the embodiments or in the relevant technical field is omitted.

It will be understood that when an element is referred to as being "connected" another element, it can be directly or indirectly connected to the other element, wherein the indirect connection includes "connection via a wireless communication network".

Also, when a part "includes" or "comprises" an element, unless there is a particular description contrary thereto, the part may further include other elements, not excluding the other elements.

Throughout the description, when a member is "on" another member, this includes not only when the member is in contact with the other member, but also when there is another member between the two members.

Additionally, terms like '~unit', '~device', '~block', '~component', and '~module' can refer to a unit that handles at least one function or operation. For example, the aforementioned terms may refer to at least one hardware component, such as an FPGA (field-programmable gate array) or an ASIC (application-specific integrated circuit), or at least one software stored in memory, or at least one process handled by a processor.

An identification code is used for the convenience of the description but is not intended to illustrate the order of each step. The each step may be implemented in the order different from the illustrated order unless the context clearly indicates otherwise.

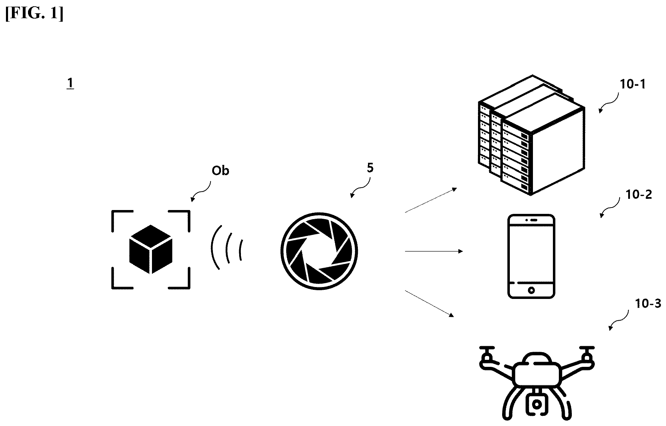

FIG. 1 is a schematic diagram for explaining each component of the imaging system according to one embodiment of the disclosure.

An imaging system 1 according to one embodiment of the disclosure includes a camera 5 for photographing an object (Ob), image restoration devices 10-1, 10-2, 10-3, and 10 for receiving an original image photographed (or acquired) by the camera 5 and generating a restored image through the disclosed image restoration method.

Specifically, the camera 5 according to one embodiment of the disclosure may be a complementary metal oxide semiconductor (CMOS) image sensor including an ultra-small lens such as a metalens and a diffractive optics lens. A general commercial lens is formed by overlapping a plurality of lenses due to the performance limitations of a single lens. As a result, the weight and size of various electronic devices using commercial lenses, such as a smartphone 10-2 and a drone 10-3, are gradually increasing, and there is a problem of reduced power efficiency. To solve these problems, a metalens (or singlet lens) has been recently developed, and a camera 5, including such an ultra-small lens, is expected to reduce the weight of the user terminal 10 and increase power efficiency.

However, the camera 5 equipped with such an ultra-small lens had a problem in that the performance of the restored image deteriorated due to process limitations and theoretical limitations. In particular, the camera 5, including such an ultra-small lens, caused strong aberrations due to the limitations of the small and thin lens. In addition, the camera 5, including the ultra-small lens, showed a significant difference in the performance of the restored image depending on the imaging space, and it was difficult to use a conventional general restoration model (including an artificial intelligence model).

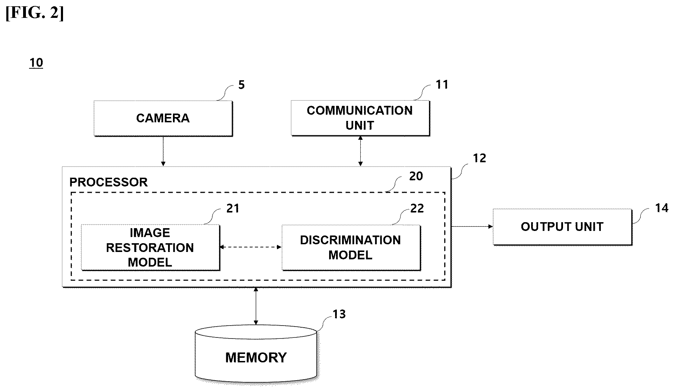

The user terminal 10 that receives the original image captured by the camera 5, that is, the original image with strong aberrations, includes an artificial intelligence model (20 in FIG. 2) trained through an adversarial learning method and may generate an image (hereinafter, a restored image) that restores the received original image through the artificial intelligence model 20 that has completed training.

The user terminal 10 may be implemented as a server 10-1, a smartphone 10-2, or a drone 10-3, as shown in FIG. 1, and may also be implemented as a computer or portable terminal capable of receiving an original image through a network. Here, the computer includes, for example, a notebook, desktop, laptop, tablet PC, slate PC, or the like equipped with a WEB Browser. The portable terminal is a wireless communication device that ensures portability and mobility. Examples of the portable terminal may include all kinds of handheld-based wireless communication devices such as a personal communication system (PCS), a global system for mobile communications (GSM), a personal digital cellular (PDC), a personal handyphone system (PHS), a personal digital assistant (PDA), an international mobile telecommunication (IMT)-2000, a code division multiple access (CDMA)-2000, a W-code division multiple access (W-CDMA), a wireless broadband internet (WiBro) terminal, a smartphone, and wearable devices such as a watch, glasses, contact lenses, or a head-mounted-device (HMD). That is, the user terminal 10 may include various configurations that may store a trained artificial intelligence model 20, and then, generate a restored image from the original image captured through the camera 5. Hereinafter, the user terminal 10 including the camera 5 is described as an embodiment (image restoration device).

FIG. 2 is a control block diagram of an image restoration device according to one embodiment of the disclosure.

Referring to FIG. 2, the disclosed image restoration device 10 may include a camera 5, a communication unit 11 capable of communicating with the outside, a processor 12 that generates a restored image by inputting an original image transmitted through the camera 5 or the communication unit 11 into an artificial intelligence model 20 that has completed training, a memory 13 that stores not only the artificial intelligence model 20 but also the received original image and an image required for learning (correct image) or the generated restored image, and an output unit 14 that displays the original image or the generated restored image.

Specifically, the camera 5 according to one embodiment of the disclosure may obtain an original image with strong aberrations by operating under the control of the processor 12 with an image sensor including an ultra-small lens, for example, a metalens or a diffractive optics lens. The camera 5 converts the original image into an electrical signal and transmits it to the processor 12 or memory 13.

The communication unit 11 is a configuration that receives an original image captured by an ultra-small lens from through a communication network from the outside. The communication unit 11 may include one or more components that enable communication with the outside, and may include, for example, at least one of a short-range communication module, a wired communication module, and a wireless communication module.

The short-range communication module may include various short-range communication modules that transmit and receive signals using a wireless communication network in a short range, such as a Bluetooth module, an infrared communication module, a radio frequency identification (RFID) communication module, a wireless local access network (WLAN) communication module, an NFC communication module, and a Zigbee communication module.

The wired communication module may include various wired communication modules such as a controller area network (CAN) communication module, a local area network (LAN) module, a wide area network (WAN) module, or a value-added network (VAN) module, as well as various cable communication modules such as a universal serial bus (USB), a high definition multimedia interface (HDMI), a digital visual interface (DVI), RS-232 (recommended standard232), power line communication, or a plain old telephone service (POTS).

The wireless communication module may include a wireless communication module that supports various wireless communication methods such as a WiFi module, a wireless broadband (WiBro) module, and a global system for mobile communication (GSM), code division multiple access (CDMA), wideband code division multiple access (WCDMA), universal mobile telecommunications system (UMTS), time division multiple access (TDMA), and long term evolution (LTE).

The memory 13 may be implemented as at least one of nonvolatile memory devices such as cache, read only memory (ROM), programmable ROM (PROM), erasable programmable ROM (EPROM), electrically erasable programmable ROM (EEPROM), and flash memory, or volatile memory devices such as random access memory (RAM), or storage media such as a hard disk drive (HDD) or CD-ROM but is not limited thereto.

The output unit 14 is a display that displays an original image or a restored image and may be provided as a digital light processing (DLP) panel, a plasma display panel, a liquid crystal display (LCD) panel, an electroluminescence (EL) panel, an electrophoretic display (EPD) panel, an electrochromic display (ECD) panel, a light emitting diode (LED) panel, or an organic light emitting diode (OLED) panel, but is not limited thereto.

The processor 12 is a configuration that controls the overall image restoration device 10, and in particular, it may train the artificial intelligence model 20, generate a restored image through the trained artificial intelligence model 20, and display the restored image through the output unit 14. In addition, the processor 12 may provide the generated restored image to a wearable device carried by the user through the communication unit 11.

Specifically, the artificial intelligence model 20 may be divided into an image restoration model 21 that crops an original image into preset patches and generates a restored image based on input data that embeds the coordinate information of the patches into the cropped patch images and a discrimination model 22 that Fourier-transforms the restored image generated by the image restoration model 21 and distinguishes the Fourier-transformed restored image. The processor 12 performs adversarial learning of the image restoration model 21 and the discrimination model 22, thereby improving the performance of the image restoration model 21 and restoring the original image received from the camera 5 or the communication unit 11 later. A specific description of the image restoration method in which the processor 12 trains the artificial intelligence model 20 and performs the image restoration using the artificial intelligence model 20 that has completed training will be described later with reference to other drawings.

The processor 12 may be a data processing device embedded in hardware and having a physically structured circuit to execute a code included in a program or a function expressed in a command. Examples of such a data processing device embedded in hardware include, but are not limited to, processing devices such as a microprocessor, a central processing unit (CPU), a processor core, a multiprocessor, an application-specific integrated circuit (ASIC), a field programmable gate array (FPGA), and a graphics processing unit (GPU). The processor 12 may be provided as a plurality of configurations including one or more processors.

Meanwhile, the image restoration device 10 may further include various configurations in addition to the configuration described above in FIG. 2 and some specific configurations may be omitted as needed.

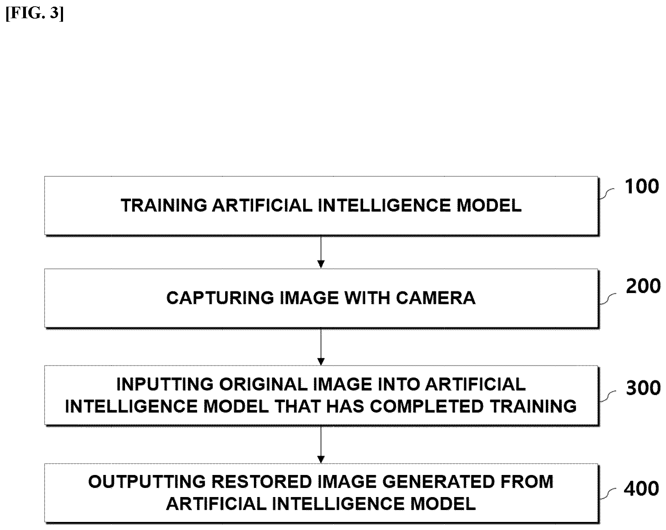

FIG. 3 is an overall flowchart of an image restoration method according to one embodiment of the disclosure.

Referring to FIG. 3, the image restoration method first trains the artificial intelligence model 20 (100).

The artificial intelligence model 20 is trained through adversarial learning. Specifically, among artificial intelligence models, the image restoration model 21 plays the role of a generator of adversarial learning that generates a restored image based on original data (learning data) input from a user. The discrimination model 22 plays the role of a discriminator of adversarial learning that performs a Fourier transform on the restored image generated by the image restoration model 21 and then compares the Fourier-transformed restored image with correct data. Here, the correct data is an image with a clear image quality that the user wants to restore.

The disclosed image restoration method continuously updates (trains) the image restoration model 21 and the discrimination model 22 so that the image restoration model 21 can generate a high-frequency restored image from a low-frequency original image, thereby training the entire artificial intelligence model 20.

When the training of the artificial intelligence model 20 is completed, the camera 5 photographs a new object (200).

Here, the image captured and transmitted by the camera 5 is a new original image of the object (Ob) captured, not the original image used for training the artificial intelligence model 20.

The image restoration method inputs the original image captured by the camera 5 into the artificial intelligence model 20 that has completed training (300).

Specifically, the original image captured by the camera 5 is input only to the image restoration model 21 that has completed training, and the image restoration model 21 that has completed training generates a high-frequency restored image.

The image restoration method outputs the restored image generated (output) from the artificial intelligence model 20 (400).

There may be various ways in which the image restoration method outputs the generated restored image. If the image restoration method is implemented in the image restoration device 10 including a display, the restored image may be displayed to the user through the output unit 14. If the image restoration device 10 is provided in a configuration that does not include the output unit 14 (for example, a drone without a display), the image restoration device 10 may also transmit the generated restored image to a wearable device such as a smartphone through the communication unit 11.

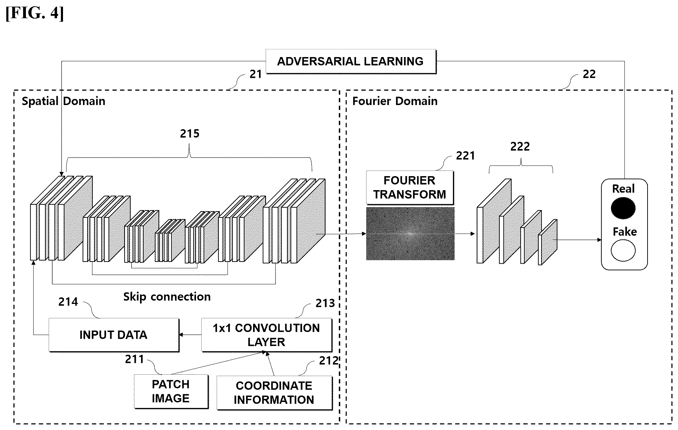

FIG. 4 is a drawing for specifically explaining an artificial intelligence model according to one embodiment of the disclosure.

Referring to FIG. 4, the artificial intelligence model 20 performs an iterative process, that is, adversarial learning, in which the image restoration model 21 generates a restored image, the discrimination model 22 distinguishes whether it is true or false by comparing the restored image with the correct image, and the image restoration model 21 with an adjusted loss function based on the discrimination result from the discrimination model 22 generates a restored image again.

The artificial intelligence model 20 is characterized by operating the image restoration model 21 in the spatial domain and operating the discrimination model 22 in the Fourier domain.

Specifically, the image restoration model 21 learns the original image using a restored image based on the patch image 211. The image restoration model 21 according to one embodiment of the disclosure uses the patch image 211 randomly cropped from the original image (learning data) in order to overcome the physical capacity limitations of the GPU or the like provided in the image restoration device 10. That is, the patch image is a plurality of images in which the original image is cropped into patches with a size set by the user.

Meanwhile, a randomly cropped patch image was also used in the conventional image restoration method using deconvolution. However, the disclosed image restoration model 21 generates coordinate information 212 of the patch image 211 to improve the restoration performance of an original image with optical aberrations and embeds the generated coordinate information 212 into the patch image 211.

Specifically, the image restoration model 21 generates the coordinate information 212 based on the patch size of the patch image 211. When the coordinate information is generated for each patch, the image restoration model 21 converts each coordinate information of the patch image 211 into two-dimensional coordinate data (2D coordinate data) through a meshgrid method.

In order to convert into two-dimensional coordinate data, the image restoration model 21 includes a 1x1 convolution layer 213. The image restoration model 21 generates the patch image 211, that is, input data 214, in which the coordinate information 212 is concatenated by passing the generated coordinate information 212 and the patch image 211 through the 1x1 convolution layer 213. The positional embedding method performed by the image restoration model 21 is specifically described through other drawings below.

The image restoration model 21 inputs the input data 214 into the first neural network 215. The first neural network 215 is a neural network in which the size of the input data 214 and the size of the output data, that is, the restored image, are the same. The first neural network 215 in FIG. 4 is illustrated to represent skip connection, which is a basic concept of a nonlinear activation-free network (NAFNet). However, the first neural network 215 is not necessarily limited to NAFNet and may include a convolution neural network (CNN) model including at least one of MIRNet and MPRNet or a Transformer model including at least one of Restormer and Uformer.

When the image restoration model 21 generates a restored image, the discrimination model 22 performs a Fourier transform 221 of the restoration model.

In many cases, the original image damaged by optical aberrations loses a lot of high-frequency components. Therefore, the disclosed discrimination model 22 performs adversarial learning through the restored image whose domain has been transformed, thereby enabling the image restoration model 21 that has completed training to generate high-frequency information well based on low-frequency information.

The Fourier-transformed restored image is input to a second neural network 222. Here, the discrimination model 22 compares the restored image with the original image and outputs whether the restored image is correct (Real) or restored (Fake). The second neural network 222 may include a CNN model including at least one of GoogleNet, AlexNet, and VGG Network.

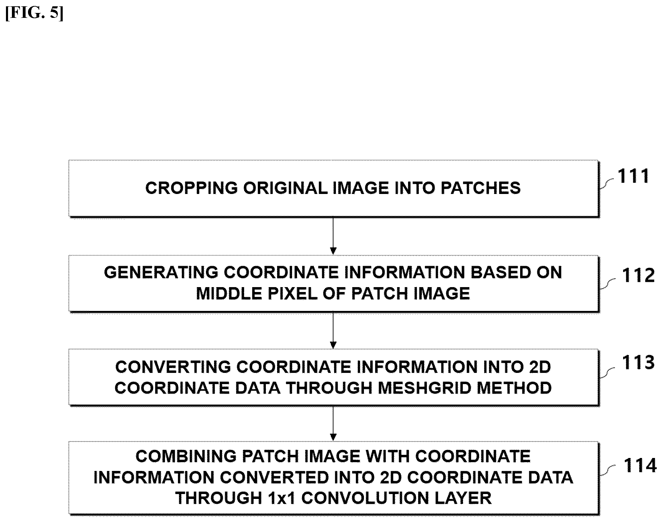

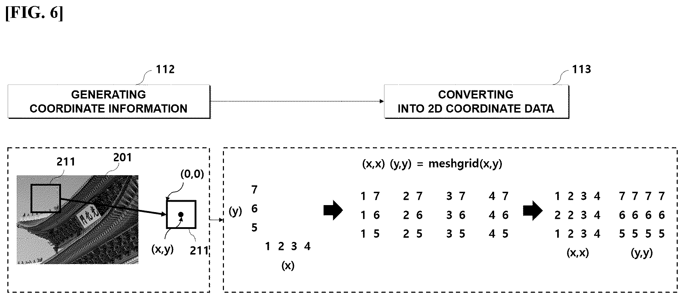

FIG. 5 and FIG. 6 are diagrams for explaining a method of generating and combining coordinate information. To avoid redundant explanations, they are described together below.

Referring first to FIG. 5, the disclosed image restoration method crops the original image in unit patches (111).

The original image included in the learning data is cropped in unit patches of a preset size (same size) within the same batch, and the location is randomly cropped.

The disclosed image restoration method generates coordinate information based on the middle pixel of the patch image 211 (112).

In the embodiment in FIG. 6, the patch image 211 may be cropped at a specific location of the original image 201. The image restoration method may generate the value of the midpoint (x,y) as the coordinate information 212 based on the pixel (0,0) at the upper left of the patch image 211.

The image restoration method converts the coordinate information 212 into 2D coordinate data through the meshgrid method (113).

The meshgrid method relates to a method of returning 2-dimensional (or 3-dimensional) grid coordinates based on the coordinates included in the vector x and vector y, and the disclosed image restoration method converts the coordinate information 212 of the patch image 211 into two-dimensional coordinate data so that the patch image 211 and the coordinate information 212 can be combined later through the 1x1 convolution layer 213. The meshgrid method illustrated in FIG. 6 relates to an example of converting specific coordinates (x,y) into grid coordinate data.

Referring back to FIG. 5, the coordinate information 212 converted into 2D coordinate data is combined with the patch image 211 through the 1x1 convolution layer 213 (114).

Here, the combination of the patch image 211 and the coordinate information 212 may be generated by inputting the patch image 211 and the coordinate information 212 into the 1x1 convolution layer 213 in a manner of combining specific sequences.

The image restoration method generates the input data 214 in which the patch image 211 and the coordinate information 212 are combined, and generates a restored image through the first neural network 215 based on this. Here, the sizes of the input data and the restored image output through the first neural network 215 are the same.

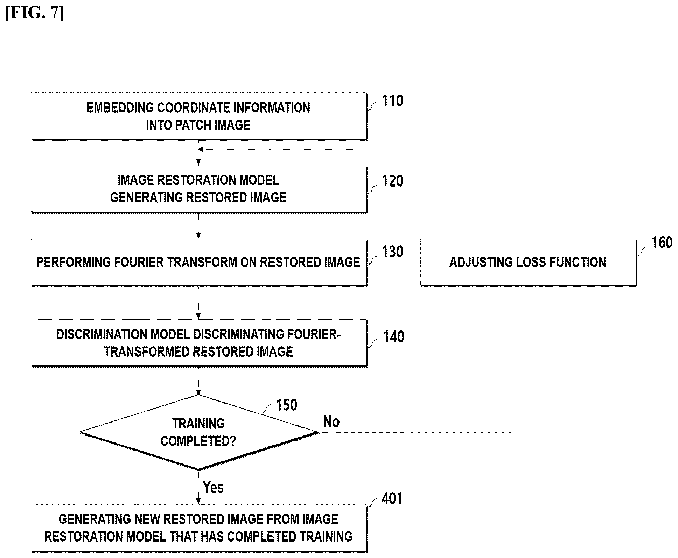

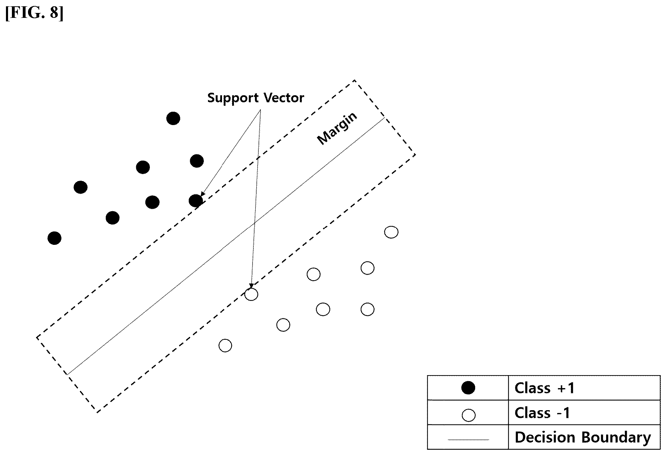

FIG. 7 is a flowchart specifically explaining a method of performing learning in an image restoration method according to one embodiment of the disclosure. FIG. 8 is a diagram explaining a discrimination process according to one embodiment. In order to avoid redundant explanations, they are described together below.

Referring first to FIG. 7, the image restoration method embeds the coordinate information 212 into the patch image 211 (110), and the image restoration model 21 generates a restored image (120).

The method of generating the coordinate information 212 and combining it with the patch image 211 to generate input data (or learning data 214) is omitted because it is described above in FIGS. 5 and 6.

When the image restoration model 21 generates a restored image, the discrimination model 22 performs a Fourier transform of the restored image (130) and discriminates the Fourier-transformed restored image (140).

Referring to FIG. 8, the discrimination model 22 according to one embodiment may control the output result from the second neural network 222 to be output as a preset reference value.

Specifically, the second neural network 222 may output a value of 1 or higher if the Fourier-transformed restored image is well restored enough to be determined as the correct image. If the Fourier-transformed restored image is determined as an image that is not restored as much as the correct image, a value of -1 or lower may be output. In other words, the reference value (1: first reference value, 2: second reference value) set as the value output by the second neural network 222 may be changed by the user. In addition, the range of the Decision Boundary and Margin illustrated in FIG. 8 may be set in various ways.

Referring again to FIG. 7, the image restoration method determines whether training through learning data is completed. If training is not completed (No in 150), the image restoration method adjusts the loss function of the artificial intelligence model 20 and then performs the image restoration step (120) again to proceed with learning.

The disclosed artificial intelligence model 20 is updated in the direction of reducing the loss function, and the overall loss function (LTotal) of the disclosed artificial intelligence model 20 is as shown in Mathematical Expression 1 below. [Mathematical Expression 1] ${L}_{Total} = {L}_{PSNR} + {λL}_{a}$

Here, λ is a hyperparameter set by the user in advance and may be changed in various ways.

Specifically, LPSNR is a loss function between the Fourier-transformed restored image (restored result) and the correct image. LPSNR is defined as Mathematical Expression 2 below. [Mathematical Expression 2] ${L}_{PSNR} \left(\hat{x}, x\right) = - 10 log \frac{{R}^{2}}{MSE \left(\hat{x}, x\right)}$

Here, X^ is the restored result from the image restoration model 21, and X represents the correct image. R is the maximum pixel value of the correct image (X^), and MSE is an indicator representing the distance between X^ and X and can be defined as Mathematical Expression 3 below. [Mathematical Expression 3] $MSE = \frac{1}{N} {\sum }_{i = 1}^{N} {\left({\hat{x}}_{i}-{x}_{i}\right)}^{2}$

In Mathematical Expression 1, La is the loss function (LG) of the image restoration model 21 and the loss function (LD) of the discrimination model 22 and is defined by Mathematical Expression 4 below. [Mathematical Expression 4] ${min}_{D , G} {L}_{a} = {min}_{D} {L}_{D} + {min}_{G} {L}_{G}$

The image restoration model is trained in the direction where the sum of the loss function (LG) of the image restoration model 21 and the loss function (LD) of the discrimination model 22 is minimized.

The loss function (LD) of the discrimination model 22 is defined by Mathematical Expression 5 below, and the loss function (LG) of the image restoration model 21 is defined by Mathematical Expression 6 below. [Mathematical Expression 5] ${L}_{D} = {E}_{x ∼ {p}_{gt}} \left[max\left(0,1-D\left(F\left(x\right)\right)\right)\right] + {E}_{\hat{x} ∼ {p}_{eam}} \left[max\left(0,1+D\left(F\left(G\left(\hat{x}\right)\right)\right)\right)\right]$ [Mathematical Expression 6] ${L}_{G} = - {E}_{\hat{x} ∼ {p}_{meta}} \left[D\left(F\left(G\left(\hat{x}\right)\right)\right)\right]$

Here, F() means Fourier transform, and D() means the output of the discrimination model 22.

Meanwhile, when training is completed (Yes in 150), the image restoration method generates a new restored image from the image restoration model 21 that has completed training (401).

Here, the new restored image is a restored image output by the image restoration model 21 that has completed training from the original image newly captured by the camera 5.

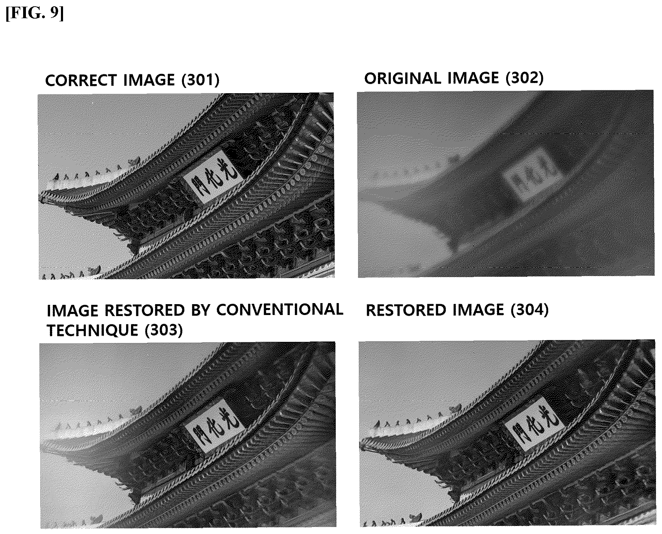

FIG. 9 is an example of the result of the disclosed imaging system.

The imaging system 1 may obtain an image with strong aberrations, such as the original image 302 in FIG. 9. The stronger the aberrations, the more high-frequency components disappear from the original image 302.

The disclosed imaging system 1 trains the image restoration model 21 through adversarial learning while training the discrimination model 22 based on the correct image 301 in FIG. 9. The imaging system 1 that has completed training may output a restored image 304 for the original image 302 through the image restoration model 21 that has completed training.

When comparing the image 303 restored by the conventional technique and the restored image 304, the image 303 restored by the conventional general deep learning model could not restore the damage to the edge. However, it can be confirmed that the restored image 304 through the disclosed imaging system 1 restores the high-frequency region more distinctly than the image 303 restored by the conventional technology.

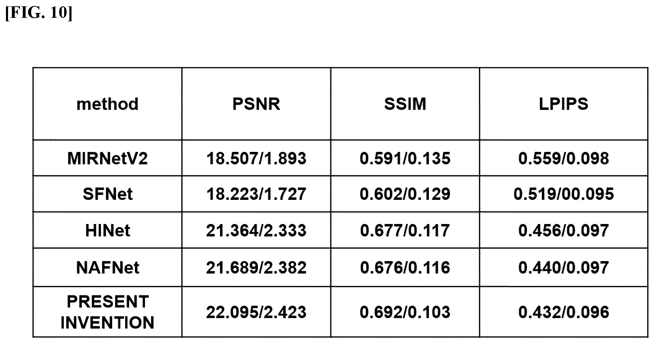

FIG. 10 is a table showing the performance comparison result of the disclosed image restoration method.

The table in FIG. 10 compares the disclosed image restoration method with the currently disclosed image restoration models such as MIRNet V2, SFNet, HINet, and NAFNet. The performance of each artificial intelligence model was compared by peak signal-to-noise ratio (PSNR), structural similarity index map (SSIM), and learned perceptual image patch similarity (LPIPS).

Specifically, it can be confirmed that the disclosed image restoration method shows a PSNR of 22.095/2.423, which is higher than the conventional model, and SSIM and LPIPS also shows 0.692/0.103 and 0.432/0.096, which are higher than the conventional model.

Through this, the disclosed image restoration method and the imaging system executing the same can solve the image quality degradation in the ultra-small imaging system by using an artificial intelligence model that has trained from image data directly captured by a lens with strong aberrations.

In addition, the disclosed image restoration method and the imaging system executing the same can restore image damage in a high spatial frequency domain by directly learning clear correct data in the frequency domain. Therefore, when the disclosed image restoration method and the imaging system executing the same are mounted on a wearable device such as a smartphone, they can solve the camera popping-out phenomenon of the smartphone and enable capturing high-quality images/videos.

In addition, the disclosed image restoration method and the imaging system executing the same may also exhibit excellent performance for downstream applications that may be performed from images captured by cameras installed in unmanned aerial vehicles, AR (Augmented Reality)/VR (Virtual Reality) devices based on improved image/video quality.

The disclosed image restoration method and the imaging system executing the same may realize lightweight lenses, so that the weight of the imaging system to be mounted may be reduced, and thus the weight of unmanned aerial vehicles, drones, or the like may be reduced, and thus, power efficiency may also be increased. In addition, the disclosed image restoration method and the imaging system executing the same may reduce the weight of the device itself by mounting an ultra-small imaging system on the imaging system that acts as the eye in the AR/VR device, and thus, power efficiency may be increased, and user fatigue may be significantly reduced, thereby improving user experience.

Meanwhile, the disclosed embodiments may be implemented in the form of a recording medium that stores commands executable by a computer. The commands may be stored in the form of program codes, and when executed by a processor, a program module may be generated to perform the operations of the disclosed embodiments. The recording medium may be implemented as a computer-readable recording medium.

The computer-readable recording medium includes all types of recording media that store commands that may be decoded by a computer. For example, there may be ROM (read only memory), RAM (random access memory), magnetic tape, magnetic disk, flash memory, optical data storage devices, and the like.

The disclosed embodiments have been described with reference to the attached drawings as described above. Those skilled in the art will understand that the present invention may be implemented in different forms from the disclosed embodiments without changing the technical idea or essential features of the present invention. The disclosed embodiments are exemplary and should not be construed as limiting.

## Claims

1. An image restoration device comprising:
a memory that stores an original image captured by a camera and an artificial intelligence model; and
a processor that trains the artificial intelligence model, wherein
the artificial intelligence model includes:
an image restoration model that crops the original image into preset patches and generates a restored image based on input data in which coordinate information of the patches is embedded into a cropped patch image; and
a discrimination model that Fourier-transforms the restored image generated by the image restoration model and distinguishes the Fourier-transformed restored image, and
the processor is configured to:
perform adversarial learning of the image restoration model and the discrimination model and generate a restored image for a new original image captured by the camera from the image restoration model that has completed training.

2. The image restoration device according to claim 1, wherein
the processor is configured to:
generate the coordinate information based on a middle pixel of the patch image;
convert the coordinate information into 2D coordinate data through a meshgrid method; and
generate the input data by concatenating the coordinate information converted into 2D coordinate data to the patch image through a 1x1 convolution layer.

3. The image restoration device according to claim 2, wherein
the processor inputs the input data output from the 1x1 convolution layer into a first neural network whose output data has the same size as the input data, and outputs the restored image from the first neural network.

4. The image restoration device according to claim 3, wherein
the first neural network includes a CNN (Convolution Neural Network) model including at least one of MIRNet, MPRNet, and NAFNet, or a Transformer model including at least one of Restormer and Uformer.

5. The image restoration device according to claim 3, wherein
the discrimination model includes a CNN model including at least one of GoogleNet, AlexNet, and VGG Network that discriminates whether the Fourier-transformed restored image is true or false, and
the processor compares the Fourier-transformed restored image with the correct image through the discrimination model, and based on the comparison result, causes the image restoration model to perform adversarial learning so that the image restoration model generates a high-frequency restored image from a low-frequency original image.

6. The image restoration device according to claim 5, wherein
the processor trains the discrimination model so that it outputs a preset first reference value or more for the correct image and outputs a preset second reference value or less for the restored image.

7. An imaging system comprising:
a camera including a metalens;
a memory that receives an original image captured by the camera and stores an artificial intelligence model;
a processor that trains the artificial intelligence model; and
a display that outputs a restored image that restores the original image through the artificial intelligence model for which the processor has completed training, wherein
the artificial intelligence model includes:
an image restoration model that crops the original image into patches of a preset size and generates a restored image based on input data in which coordinate information of the patches is embedded into a cropped patch image; and
a discrimination model that Fourier-transforms the restored image generated by the image restoration model and distinguishes the Fourier-transformed restored image.

8. The imaging system according to claim 7, wherein
the processor is configured to:
generate the coordinate information based on a middle pixel of the patch image;
convert the coordinate information into 2D coordinate data through a meshgrid method; and
generate the input data by concatenating the coordinate information converted into 2D coordinate data to the patch image through a 1x1 convolution layer.

9. The imaging system according to claim 8, wherein
the processor inputs the input data output from the 1x1 convolution layer into a first neural network whose output data has the same size as the input data, and outputs the restored image from the first neural network.

10. The imaging system according to claim 9, wherein
the processor compares the Fourier-transformed restored image with the correct image through the discrimination model, and based on the comparison result, causes the image restoration model to perform adversarial learning so that the image restoration model generates a high-frequency restored image from a low-frequency original image.

11. The imaging system according to claim 10, wherein
the processor trains the discrimination model so that it outputs a preset first reference value or more for the correct image and outputs a preset second reference value or less for the restored image.

12. An image restoration method, comprising:
training an artificial intelligence model;
causing a camera including a metalens or a diffractive optics lens to acquire an original image; and
generating a restored image of the original image through the artificial intelligence model that has completed training, wherein
the artificial intelligence model includes:
an image restoration model that crops an image of learning data into patches of a preset size and generates a restored image based on input data in which coordinate information of the patches is embedded into a cropped patch image; and
a discrimination model that Fourier-transforms the restored image generated by the image restoration model and distinguishes the Fourier-transformed restored image, and
the training of the artificial intelligence model includes:
comparing the Fourier-transformed restored image with the correct image through the discrimination model, and based on the comparison result, causing the image restoration model to perform adversarial learning so that the image restoration model generates a high-frequency restored image from a low-frequency original image.

13. The image restoration method according to claim 12, wherein
the causing of the image restoration model to generate the restored image includes:
generating the coordinate information based on a middle pixel of the patch image;
converting the coordinate information into 2D coordinate data through a meshgrid method; and
embedding the input data by concatenating the coordinate information converted into 2D coordinate data to the patch image through a 1x1 convolution layer.

14. The image restoration method according to claim 13, wherein
the causing of the image restoration model to generate the restored image includes:
inputting the input data output from the 1x1 convolution layer into a first neural network whose output data has the same size as the input data, and outputting the restored image from the first neural network.

15. The image restoration method according to claim 12, wherein
the training of the artificial intelligence model includes
training the discrimination model so that it outputs a preset first reference value or more for the correct image and outputs a preset second reference value or less for the restored image.
